# EUROPEAN PATENT SPECIFICATION

(11) **EP 0 575 569 B1**
(45) Date of publication and mention of the grant of the patent: **08.05.1996**
(21) Application number: 92923373.2
(22) Date of filing: 14.11.1992
(51) Int. Cl.: A61C 17/26

(54) **ELECTRIC TOOTHBRUSH**
Elektrische Zahnbürste
BROSSE A DENTS ELECTRIQUE

(30) Priority: 19.11.1991 DE 4138021
(43) Date of publication of application: 29.12.1993
(73) Proprietor: BAUSCH & LOMB INCORPORATED, Rochester New York 14601-0054 (US)
(72) Inventor: HOMMANN, Edgar, CH-3257 Grossaffoltern (CH)
(74) Representative: Schlagwein, Udo, Dipl.-Ing.
(86) International application number: EP9202624
(87) International publication number: WO9309729

(56) References cited:
- EP-A- 0 357 863
- DE-U- 8 911 427
- US-A- 4 603 448
- US-A- 5 077 855

## Description

The invention relates to an electric toothbrush with a hand-held handle component, with a motor and drive mechanism, and a brush attachment, which has several rotatable tufts of bristles, fastened to said handle component. Said tufts are driven by a transmission built into said brush attachment. The drive mechanism is designed in such a way that, in addition to a rotational movement of the bristle tufts, it also creates an oscillating movement of the brush attachment about its longitudinal axis.

Such a toothbrush is the subject of EP-A-O 357 863. In this known toothbrush, the brush attachment can be oscillated about its longitudinal axis by means of a secure coupling link with which it is attached to the forward part of the handle component's casing. The transmission mechanism is designed as a non-rotating connecting rod within the brush attachment, wherein said connecting rod can create an oscillating movement about its longitudinal axis and a back-and-forth movement in the direction of its longitudinal axis by means of an oscillating crank and an eccentric that engages said crank. The back-and-forth movement of the connecting rod is transformed in the bristle head of the brush attachment to a rotational movement of the bristle tufts while the oscillating movement of the connecting rod creates a corresponding oscillation of the entire brush attachment.

Movement of the bristle tufts by means of a connecting rod is relatively expensive, and the connecting rod presents a problem if one wants to increase the angle at which the individual bristle tufts oscillate. Further, it is impossible to continuously rotate the bristle tufts in one rotational direction using a connecting rod.

Electric toothbrushes have also become known in which the bristle tufts are driven by a shaft instead of a connecting rod. US-A-2 215 031 and DE-A-34 06 112 are examples of this state of the art. However, in both of these toothbrushes, the part that holds the bristle tufts of the toothbrush cannot be moved by the motor of the toothbrush relative to the handle component.

DE-A-8 911 427 describes a toothbrush with a brush head, having bristle tufts, which are firmly secured to the material of the brush head. A wheel inside a brush attachment does not serve to drive the bristle tufts but to make the complete brush head oscillate. A hollow shaft, which is denoted as switch sleeve in the specification, only serves to turn on a switch in two different directions so that the motor of the toothbrush turns in either of two directions, dependent on the direction the handle is turned, relative to the hollow shaft.

The invention addresses the problem of designing a toothbrush of the type mentioned above wherein the bristle tufts can oscillate over a large angle or even complete a full rotation, and wherein the entire brush attachment that holds the bristle tufts can be moved by a motion relative to the handle component.

The invention solves this problem by designing the transmission mechanism as a revolving shaft, while the brush attachment is designed to be inserted into a hollow shaft that can rotate and/or slide within the handle component. A drive shaft, which is located within said hollow shaft, is driven by a drive mechanism coupled with the shaft in the brush attachment so as to create an oscillating movement of the hollow shaft around its longitudinal axis and/or a back-and-forth movement in the direction of its longitudinal axis.

Since, according to the invention, the brush attachment is not inserted into the casing but into a hollow shaft, and since the drive shaft for the shaft of the brush attachment is placed inside the hollow shaft, the brush attachment can be moved by driving the hollow shaft, without thereby affecting the drive of the bristle tufts. The toothbrush of the invention can be assembled relatively simply, and the movement of the brush attachment cleans teeth better than an electric toothbrush in which only the bristle tufts rotate. Driving the bristle tufts with a shaft makes it possible for said bristle tufts to rotate either continuously or to oscillate back and forth over a large angle.

The mechanism for moving the hollow shaft and the drive shaft can be designed in different ways. A particularly simple solution in which the hollow shaft rotates around its longitudinal axis, is to equip the hollow shaft within the handle component with a radial arm with a radially aligned crank guide, into which locks a toothbrush-motor driven eccentric, which is aligned parallel to the axis of the hollow shaft, and wherein said hollow shaft also has a toothed quadrant with external teeth into which meshes a toothed wheel that is rotatably mounted within the toothbrush, and wherein said toothed wheel in turn engages a pinion on the drive mechanism by means of another toothed wheel which is placed coaxially to said toothed wheel and connected to it to be rotationally rigid.

In such a toothbrush, the hollow shaft, which oscillates around its longitudinal axis, drives the drive shaft placed inside of it. The bristle tufts, therefore, change their rotational direction in the same cadence at which the brush attachment oscillates around its longitudinal axis.

In an alternate design, in which the hollow shaft is arranged to be rotatable and axially movable, the drive mechanism has a toothed wheel, designed as a bevel or contrate gear, which is driven by the pinion of the motor. The toothed wheel turns, diagonally to the main extension of the handle component, around the revolving axis. The toothed wheel engages with an eccentric pin, which is aligned in parallel to its rotating axle, and a notch of an oscillating crank, which is connected to said hollow shaft parallel to the axis. The toothed wheel, which is designed as a bevel wheel or contrate gear on the side that lies opposite to the side of the pinion of the motor, meshes with a pinion of the drive shaft.

In such a toothbrush, the individual tufts of bristles rotate continuously in one direction. The design of the mechanism in the brush attachment can be such that, for instance, the bristle tufts on one side rotate in the opposite direction to those on the other side. Simultaneously with the rotational motion of the bristle tufts, the brush attachment executes an elliptical movement because of the axially sliding and simultaneous oscillating movement of the hollow shaft around its longitudinal axis. Such a design is very advantageous for the teeth-cleaning process.

The combined movement of the hollow shaft and the drive shaft can be achieved easily by placing a crosshead, which can rotate on the eccentric pin, into the notch of the oscillating crank, and by designing the two sides of the crosshead which are parallel to the longitudinal axis of the toothbrush and/or the two corresponding sides of the notch to be curved or canted to allow the oscillating crank to perform a rocking motion. Such a mechanism corresponds largely to the previously mentioned EP-A-O 357 863 but differs from it, aside from its hollow shaft, primarily in that the toothed wheel with the eccentric simultaneously drives the drive shaft within the hollow shaft.

The invention lends itself to many designs. To further explain its basic principle, two designs are illustrated in the drawing and described below. The drawing shows:
- Fig. 1: a perspective view of a toothbrush according to the invention;
- Fig. 2: a longitudinal cross-sectional view through an area of the mechanism of one design of the toothbrush;
- Fig. 3: a longitudinal cross-sectional view through an area of the mechanism of another design of the toothbrush.

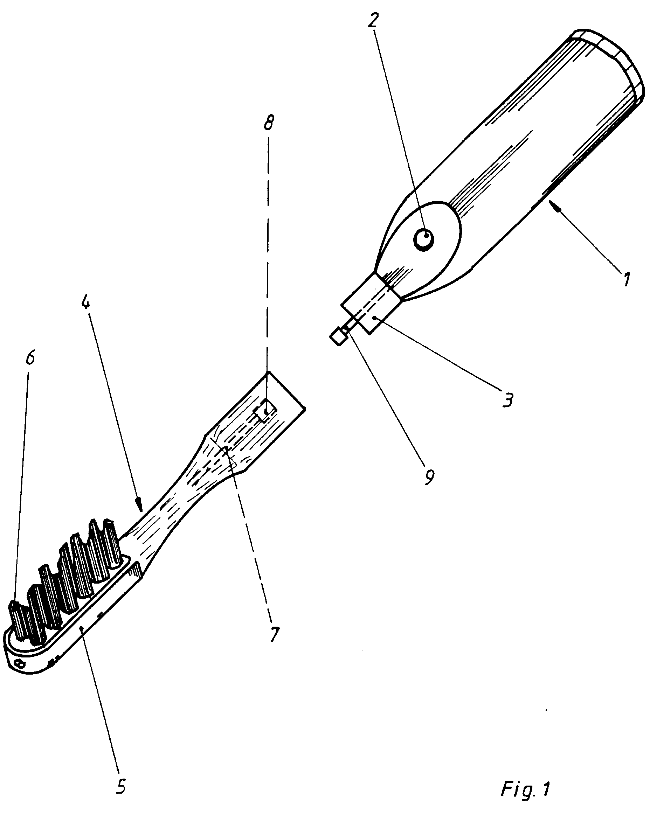

Figure 1 shows in perspective a still unassembled electric toothbrush with a hand-held handle component 1 having a switch 2 to turn the electric toothbrush on and off. A hollow shaft 3 protrudes from the handle component 1 over which the brush attachment 4 is placed. When attached, the brush attachment is securely held on the hollow shaft 3 by a locking device (not shown).

The brush attachment 4 has a bristle head 5 with several rotatable bristle tufts 6. To drive the bristle tufts 6, a revolving shaft 7 is disposed within the brush attachment (shown by broken lines). Shaft 7 can be coupled to a drive shaft 9 by a coupler 8 which is arranged coaxially with the hollow shaft 3 in the handle component 1.

Depending on the type of toothbrush, the drive shaft 9 can rotate continuously or oscillate. Consequently, the bristle tufts 6 either rotate in one direction or they oscillate back and forth. The hollow shaft 3 is driven in such a way that it either oscillates around its longitudinal axis, slides back and forth in the direction of its longitudinal axis, or executes both movements simultaneously or in any desired sequence.

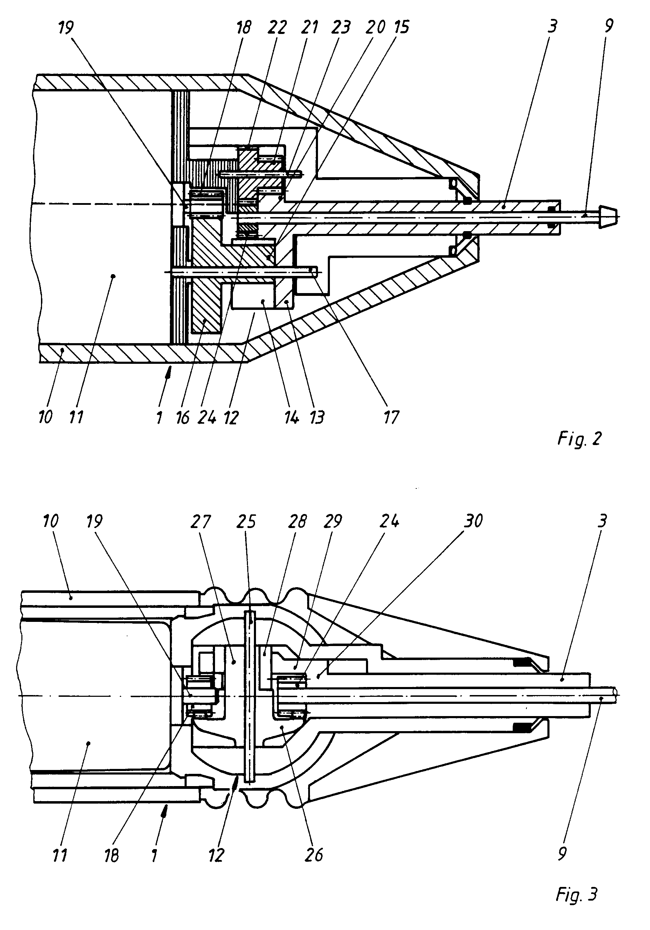

Figure 2 shows the front part of the handle component 1, enlarged compared to Figure 1, having a casing 10 which holds an electric motor 11 and a drive mechanism 12. The hollow shaft 3 and the drive shaft 9 again protrude from the casing 10.

Within the casing 10, the hollow shaft has a radially aligned arm 13 with a radially-extending crank guide 14. Crank guide 14 is engaged by an eccentric 15, which is placed at the front end of a toothed wheel 16, which is rotatably mounted so as to be parallel to the longitudinal axis of the handle component 1. Toothed wheel 16 engages a motor shaft 19, driven by motor 11, with a pinion 18. Because of the rotational movement of eccentric 15, the arm 13 oscillates constantly back and forth, so that the hollow shaft 3 executes a corresponding oscillating movement about its longitudinal axis.

On the side radially opposite to arm 13, the hollow shaft 3 has a toothed quadrant 20 into which meshes a toothed wheel 21 which, together with a rotationally rigidly connected toothed wheel 22, is rotatably mounted on a rigid-casing axle 23. Axle 23 is aligned parallel to the longitudinal axis of the handle component 1. The toothed wheel 22 engages a pinion 24 which sits within the casing 10 at the end of the drive shaft 9 which protrudes out of the hollow shaft 3. Because of the oscillating movement of the hollow shaft 3 created by the eccentric 15, the drive shaft 9, via the toothed quadrant 20, the toothed wheels 21, 22 and the pinion 24, consequently also oscillates about its longitudinal axis.

Figure 3 shows a design of the mechanism 12 that differs from that of Figure 2, wherein the hollow shaft 3 and the drive shaft 9 are driven by the motor 11. The motor 11 in turn has a motor shaft 19 with a pinion 18. Pinion 18 continuously drives a toothed wheel 26 mounted rotatably around a revolving axle 25. Toothed wheel 26 may be designed as a bevel gear or contrate gear. Axle 25 is rigidly mounted to the casing and aligned diagonally to the longitudinal axis of the handle component 1. Toothed wheel 26, on the side that lies opposite to the side of pinion 18, meshes with the pinion 24, which drives the drive shaft 9. In this manner the drive shaft 9 rotates constantly in one direction.

An eccentric pin 27 is provided on the toothed wheel 26, extending in the direction of the revolving axle 25, which engages a crosshead 28 of an oscillating crank 29. The oscillating crank 29 lies parallel to the hollow shaft 3 and is firmly connected thereto by a radial connecting link 30. The exact design of this component of the mechanism 12, including the toothed wheel 26, the eccentric pin 27, the crosshead 28 and the oscillating crank 29, is described in the European patent disclosure 0 357 863.

The hollow shaft 3 in the design shown in Figure 3 is mounted in the casing 10 of the handle component 1 in such a way that it is rotatable and axially movable. Through the rotation of the eccentric pin 27, the hollow shaft 3 first slides back and forth in the direction of its longitudinal axis. However, since the eccentric pin 27 is mounted diagonally to the hollow shaft 3 and since the hollow shaft 3 cannot move laterally, the oscillating crank 29 follows the lateral movement of the eccentric pin 27 by tilting around the longitudinal axis of the hollow shaft 3. This movement is also described in detail in EP-A-O 357 863. Thus, the hollow shaft 3 in this design executes a back and forth movement in longitudinal direction and also an oscillating movement around its longitudinal axis.

### List of Reference Numbers Used

- 1: handle component
- 2: switch
- 3: hollow shaft
- 4: brush attachment
- 5: brush head
- 6: bristle tufts
- 7: shaft
- 8: coupler
- 9: drive shaft
- 10: casing
- 11: motor
- 12: drive mechanism
- 13: arm
- 14: crank guide
- 15: eccentric
- 16: toothed wheel
- 17: axle
- 18: pinion
- 19: motor shaft
- 20: toothed quadrant
- 21: toothed wheel
- 22: toothed wheel
- 23: axle
- 24: pinion
- 25: revolving axle
- 26: toothed wheel
- 27: eccentric pin
- 28: crosshead
- 29: oscillating crank
- 30: connecting link

## Claims

1. Electric toothbrush comprising a hand-held handle component (1) containing a motor (11) and a drive mechanism (12) and a brush attachment (4) for attachment to said handle component (1), the brush attachment (4) having a plurality of rotatable bristle tufts (6) that can be driven by a transmission component disposed within the brush attachment (4), whereby said drive mechanism (12) is adapted to produce in addition to the rotational movement of the bristle tufts (6) an oscillating rotation of the brush attachment (4) about its longitudinal axis, characterised in that the transmission component is a rotating shaft (7) and that the brush attachment (4) is adapted to be attached to a hollow shaft (3), disposed in said handle component (1) to rotate about its longitudinal axis and/or to move back and forth in the direction of its longitudinal axis and in that the drive mechanism (12) is adapted to drive a drive shaft (9), disposed inside said hollow shaft (3) and connectable to the rotating shaft (7), and to produce an oscillating rotation of said hollow shaft (3) about its longitudinal axis and/or a back and forth movement in the direction of its longitudinal axis.

2. Electric toothbrush according to claim 1, whereby the hollow shaft (3) is rotatable around its longitudinal axis, characterised in that said hollow shaft (3) includes inside said handle component (1) a radial arm (13) with a radially running crank guide (14) which meshes with an eccentric (15) which is arranged to be parallel to said hollow shaft (3) and which is driven by the motor (11) of the toothbrush and whereby said hollow shaft (3) further includes a toothed quadrant (20) having external teeth, said toothed quadrant (20) being engaged by a first toothed wheel (21) which is mounted rotatably within the toothbrush and which, in turn, engages a pinion (24) on the drive shaft (9) by means of a second toothed wheel (22) which is aligned coaxially with said first toothed wheel (21) and is rotationally rigidly connected to it.

3. Electric toothbrush in accordance with claim 1, whereby the hollow shaft (3) is rotatable around its longitudinal axis and slidable in the direction of said axis, characterised in that said drive mechanism (12) includes a toothed wheel (26), formed as a bevel wheel or a contrate gear, driven by a pinion (18) of the motor (11) around a revolving axle (25), said axle (25) being aligned diagonally to the length of the handle component (1) and whereby an eccentric pin (27) disposed parallel to said revolving axle (25) engages a notch in an oscillating crank (29), said oscillating crank (29) being connected to said hollow shaft (3) so that their axis are parallel, so that said toothed wheel (26) engages the drive shaft (9) with a pinion (24) on a side opposite to the side of the pinion (18) of the motor (11).

4. Electric toothbrush in accordance with claim 3, characterised in that a crosshead (28), which is rotatable on said eccentric pin (27), is fitted in the notch of said oscillating crank (29), two axis-parallel sides of the crosshead (28) and/or the corresponding sides of the notch being curved or canted to create a tilting movement of the oscillating crank (29).

## Patentansprüche

1. Elektrische Zahnbürste mit einem von Hand zu führenden, einen Motor (11) und ein Getriebe (12) aufweisenden Griffteil (1) und einer auf diesem zu befestigenden Aufsteckbürste (4), welche mehrere drehbar angeordnete Borstenbüschel (6) hat, die durch ein in der Aufsteckbürste (4) angeordnetes Übertragungsteil antreibbar sind und bei dem das Getriebe (12) derart ausgebildet ist, daß es zusätzlich zu einer Drehbewegung der Borstenbüschel (6) eine um ihre Längsachse pendelnde Bewegung der Aufsteckbürste (4) erzeugt, **dadurch gekennzeichnet**, daß das Übertragungsteil als drehbare Welle (7) und die Aufsteckbürste (4) zum Aufstecken auf eine Hohlwelle (3) ausgebildet ist, welche im Griffteil (1) drehbar und/oder verschieblich angeordnet und das Getriebe (12) zum Antrieb einer in der Hohlwelle (3) angeordneten, mit der Welle (7) zu kuppelnden Antriebswelle (9) und zum Erseugen einer pendelnden Drehbewegung der Hohlwelle (3) um ihre Längsachse und/oder in Richtung der Längsachse hin und her gehenden Bewegung ausgebildet ist.

2. Elektrische Zahnbürste nach Anspruch 1, bei der die Hohlwelle (3) um ihre Längsachse drehbar ist, **dadurch gekennzeichnet**, daß die Hohlwelle (3) im Griffteil (1) einen radialen Arm (13) mit einer radial verlaufenden Kulissenführung (14) aufweist, in welche ein um eine parallel zur Hohlwelle (3) ausgerichteter, vom Motor (11) der Zahnbürste angetriebener Exzenter (15) eingreift und daß die Hohlwelle (3) desweiteren ein Zahnsegment (20) mit einer Außenverzahnung hat, in welche ein erstes drehbar in der Zahnbürste gelagertes Zahnrad (21) kämmt, welches seinerseits über ein zweites koaxial zum ersten Zahnrad (21) angeordnetes und drehfest mit ihm verbundenes Zahnrad (22) in ein Ritzel (24) auf der Antriebswelle (9) greift.

3. Elektrische Zahnbürste nach Anspruch 1, bei der die Hohlwelle (3) um ihre Längsachse drehbar und zur genannten Achse axial verschieblich angeordnet ist, **dadurch gekennzeichnet**, daß das Getriebe (12) ein von einem Ritzel (18) des Motors (11) angetriebenes, um eine quer zur Haupterstreckung des Griffteiles (1) verlaufende Drehachse (25) umlaufendes, als Kegelrad oder Kronenzahnrad ausgebildetes Zahnrad (26) aufweist, welches mit einem parallel zu seiner Drehachse (25) ausgerichteten Exzenterzapfen (27) in eine Aufnahme einer Schwinge (29) greift, welche in achsparalleler Ausrichtung mit der Hohlwelle (3) verbunden ist und daß das Zahnrad (26) mit dem Ritzel (24) der Antriebswelle (9) auf der dem Ritzel (18) des Motors (11) gegenüberliegenden Seite kämmt.

4. Elektrische Zahnbürste nach Anspruch 3, **dadurch gekennzeichnet**, daß auf dem Exzenterzapfen (27) verdrehbar ein in die Aufnahme der Schwinge (29) eingesetzter Gleitstein (28) angeordnet ist und daß die beiden achsparallel verlaufenden Seiten des Gleitsteines (28) und/oder die entsprechenden Seiten der Aufnahme zur Ermöglichung einer Kippbewegung der Schwinge (29) gekrümmt oder abgeschrägt verlaufen.

## Revendications

1. Une brosse à dent électrique comprenant un composant manche à main (1) contenant un moteur (11) et un mécanisme d'entraînement (12) ainsi qu'un brosse annexe (4) pour être fixé audit composant manche (1), la brosse annexe ayant plusieurs touffes de poils rotatifs (6) pouvant être entraînés par un composant de transmission disposé à l'intérieur de la brosse annexe (4) dans lequel ledit mécanisme d'entraînement (12) est adapté pour produire, outre le mouvement rotatif des touffes de poils (6), une rotation oscillante de la brosse annexe (4) par rapport à son axe longitudinal, caractérisée en ce que la composant de transmission est un axe rotatif (7) et la brosse annexe (4) est adapté pour être fixé sur un axe creux (3) disposé dans ledit composant manche (1) pour tourner par rapport à son axe longitudinal et/ou déplacer vers l'arrière et vers l'avant dans la direction de son axe longitudinal et en ce que la mécanisme d'entraînement (12) est adapté pour entraîner un axe d'entraînement (9) disposé à l'intérieur dudit axe creux (3) et connectable à l'axe rotatif (7) et pour produire une rotation oscillante dudit axe creux (3) par rapport à son axe longitudinal et/ou un mouvement vers l'arrière et vers l'avant dans la direction de son axe longitudinal.

2. La brosse à dent électrique de la revendication 1 dans laquelle l'axe creux (3) est rotatif autour de son axe longitudinal, caractérisée en ce que ledit axe creux (3) comprend à l'intérieur dudit composant manche (1) un bras radial (13) avec un guide coudé à entraînement radial (14) engagé avec un excentrique (15) disposé parallèlement audit axe creux (3) et qui est actionné par le moteur (11) de la brosse à dent et dans laquelle ledit axe creux (3) comprend également un cadran denté (20) ayant des dents externes, ledit cadran denté (20) étant engagé par une première roue dentée (21) laquelle est montée de façon rotative dans la brosse à dent et qui, à son tour, est engagée avec un pignon (24) sur l'axe d'entraînement (9) par l'intermédiaire d'une seconde roue dentée (22) alignée coaxialement avec ladite première roue dentée (21) et est rigidement rotationellement reliée à elle.

3. La brosse à dent électrique de la revendication 1 dans laquelle l'axe creux (3) est rotatif autour de son axe longitudinal et coulissable dans la direction dudit axe, caractérisée en ce que ledit mécanisme d'entraînement (12) comprend une roue dentée (26) formée comme une roue conique ou un engrannage à denture frontale, entraîné par un pignon (18) du moteur (11) autour d'un axe de rotation (25), ledit axe (25) étant aligné diagonalement par rapport à la longueur du composant manche (1) et dans laquelle une goupille excentrique (27) disposé parallelement audit axe de rotation (25) s'engage dans une encoche d'un vilebrequin oscillant (29), ledit vilebrequin oscillant (29) étant connecté audit axe creux (3) de manière à ce que leurs axes soient parallèles, afin que ladite roue dentée (26) s'engage dans l'axe d'entraînement (9) avec un pignon (24) d'une côté opposé au côté du pignon (18) du moteur (11).

4. La brosse à dent électrique de la revendication 3 caractérisée en ce qu'une crosse (28) rotative sur ladite goupille excentrique (27) est insérée dans l'encoche dudit vilebrequin oscillant (29), les deux côtés parallèles à l'axe de la crosse (28) et/ou les côtés correspondants de l'encoche étant courbés ou biseautés pour créer un mouvement de bascule au niveau du vilebrequin oscillant (29).
